(19) Europäisches Patentamt / European Patent Office / Office européen des brevets

(11) **EP 3 621 381 B1**

(12) **EUROPEAN PATENT SPECIFICATION**

(45) Date of publication and mention
of the grant of the patent:
**01.11.2023 Bulletin 2023/44**

(21) Application number: **18794341.0**

(22) Date of filing: **26.03.2018**

(51) International Patent Classification (IPC):
*H04W 72/04* (2023.01)     *H04L 5/00* (2006.01)
*H04L 1/00* (2006.01)

(52) Cooperative Patent Classification (CPC):
**H04L 1/0046; H04L 5/0053; H04L 5/0094;**
**H04W 72/04; H04W 72/12;** H04L 5/0007

(86) International application number:
**PCT/CN2018/080537**

(87) International publication number:
**WO 2018/201823 (08.11.2018 Gazette 2018/45)**

(54) **METHOD AND DEVICE FOR TRANSMITTING DOWNLINK CONTROL CHANNEL**

VERFAHREN UND VORRICHTUNG ZUR ÜBERTRAGUNG EINES DOWNLINK-STEUERKANALS

PROCÉDÉ ET DISPOSITIF DE TRANSMISSION D'UN CANAL DE COMMANDE DE LIAISON DESCENDANTE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **05.05.2017 CN 201710314161**

(43) Date of publication of application:
**11.03.2020 Bulletin 2020/11**

(73) Proprietor: **Datang Mobile Communications
Equipment Co., Ltd.
Beijing 100085 (CN)**

(72) Inventors:
• **WANG, Lei
Beijing 100191 (CN)**

• **PAN, Xueming
Beijing 100191 (CN)**

(74) Representative: **Cabinet Nony
11 rue Saint-Georges
75009 Paris (FR)**

(56) References cited:
CN-A- 102 164 416     CN-A- 103 138 885
CN-A- 103 795 514     CN-A- 105 763 294
CN-A- 105 871 527     KR-A- 20140 031 793
US-A1- 2015 085 802   US-A1- 2016 021 644
US-A1- 2016 323 850

**Description**

**Field**

The present application relates to the technical field of communication, in particular to a method and a device for receiving a downlink control channel, a method and a device for transmitting a downlink control channel and a readable storage medium.

**Background**

An existing LTE downlink control channel is introduced as follows.

A physical downlink control channel (PDCCH) of an LTE system is used for carrying scheduling information and other control information. There may be multiple PDCCHs in the control region of each downlink subframe. A control channel is transmitted through a control channel element (CCE) or multiple consecutive CCEs, and each CCE includes 9 resource element groups (REG).

In order to extend the capacity of the PDCCH, an enhanced PDCCH (EPDCCH) is introduced in Release 11 (Rel-11). The EPDCCH is transmitted in a data area in a subframe, and cannot occupy the transmission space of the PDCCH.

The set of aggregation levels supported by an E-PDCCH set has been determined according to the current standards and is related to factors such as the type of the E-PDCCH set, the subframe type and the number of REs which are available in a PRB pair and can be used for E-PDCCH transmission.

User equipment (UE) attempts to decode all PDCCHs in the search space according to the format of downlink control information (DCI) needing to be monitored, that is, the user equipment monitors a PDCCH candidate set. The candidates are resource locations used for transmitting the PDCCHs or the ePDCCHs in a set of resources.

The search space of aggregation level (AL) consists of multiple PDCCH candidates. The AL is the size of the physical resource that needs to be occupied by PDCCHs or ePDCCHs. For example, if AL=1, one CCE is required to transmit a PDCCH or ePDCCH; and if AL=2, two CCEs are required to transmit a PDCCH or ePDCCH.

In the existing LTE system, when the terminal detects and receives the PDCCH or the ePDCCH in the control region, the number of PDCCH or ePDCCH candidates in the control region is determined. For example, the number of candidates included in each AL is fixed. The number of candidates included in different sets of resources (CORESET) and the number of candidates included in different ALs are fixed. Therefore, the LTE system in the related art does not support setting of variable number of candidates, resulting in the consequence that transmission of the downlink control channel is not flexible enough to be changed according to actual needs. If the number of candidates is large, the terminal may blindly detect the downlink control channels with high power consumption, so that resources are wasted. If the number of candidates is small, the number of blind detections of the terminal is small, and the probability of blocking is high. Document US2015/0085802A1 provides methods and apparatus for the transmission of physical downlink control signaling. In one method, a User Equipment (UE) receives information associated with a physical resource block (PRB) for enhanced physical downlink control channel (EPDCCH) from a base station. Based on either first information received on physical control format indicator channel (PCFICH) or second information received on higher layer signaling, the UE determines a starting orthogonal frequency division multiple (OFDM) symbol on which EPDCCH transmission starts. The UE receives control information on the EPDCCH based on the information associated with the PRB and the determined starting OFDM symbol.

Document US2016/0323850A1 provides a method for a user equipment (UE) to determine locations for M candidate physical downlink control channels (PDCCHs) in a set of N physical resource blocks (PRBs) in a transmission time interval (TTI). The method includes determining a location for each of M candidate PDCCHs in a different PRB if N is greater than or equal to M and determining a location for each of N candidate PDCCHs in a different PRB and determining a location for each of remaining M-N candidate PDCCHs in a different PRB if M is greater than M and 2N is greater than or equal to M.

Document US2016/0021644A1 provides a method for a relay to receive downlink control information from a base station through a Relay-Physical Downlink Control Channel (R-PDCCH), and the relay. The method according to one embodiment includes determining one or more candidate positions for the R-PDCCH; monitoring whether or not the R-PDCCH is being transmitted at the one or more candidate positions; and receiving, through the monitoring that the R-PDCCH is being transmitted, the downlink control information included in the R-PDCCH. The one or more candidate positions are set as a Virtual Resource Block (VRB) set including N VRBs, and a combination of 2 adjacent candidate positions among candidate positions of a lower aggregation level composes one of candidate positions of a higher aggregation level. The VRBs of the VRB set are assigned numbers. Respective candidate positions for the R-PDCCHs of aggregation levels L are determined as VRBs.

## Summary

The embodiments of the present disclosure provide a method and a device for receiving a downlink control channel, a method and a device for transmitting a downlink control channel and a readable storage medium, for realizing more flexible transmission of the downlink control channel according to the number of actual candidates, enabling a terminal to perform, according to the number of actual candidates, downlink control channel detection and reception, avoiding the problem that the terminal might perform too many or too few blind downlink control channel detections, and satisfying actual needs. The invention is set out in the appended set of claims.

## Brief Description of the Drawings

In order to illustrate the technical solutions in the embodiments of the present application more clearly, the figures needing to be used in the description of the embodiments will be briefly described below. It is obvious that the figures in the following description are only some embodiments of the present application, and those skilled in the art can also obtain other figures based on these figures without any creative work.

Fig. 1 is a flow diagram of a method for transmitting a downlink control channel on a terminal side according to the embodiments of the present application.
Fig. 2 is a flow diagram of a method for transmitting a downlink control channel on a base station side according to the embodiments of the present application.
Fig. 3 is a structural schematic diagram of a device for transmitting a downlink control channel on a terminal side according to the embodiments of the present application.
Fig. 4 is a structural schematic diagram of a device for transmitting a downlink control channel on a base station side according to the embodiments of the present application.
Fig. 5 is a structural schematic diagram of another device for transmitting a downlink control channel on a terminal side according to the embodiments of the present application.
Fig. 6 is a structural schematic diagram of another device for transmitting a downlink control channel on a base station side according to the embodiments of the present application.

## Detailed Description of the Embodiments

The invention is defined by the appended claims. The embodiments of the present application provide a method and a device for transmitting a downlink control channel, for realizing more flexible transmission of the downlink control channel according to the number of actual candidates, enabling a terminal to perform, according to the number of actual candidates, downlink control channel detection and reception, avoiding the problem that the terminal might perform too many or too few blind downlink control channel detections, and satisfying actual needs.

With the development of mobile technology, future mobile communication systems need to provide lower network delay and support a wider variety of services. The short transmitted time interval (TTI) often does not occupy the entire system bandwidth in the frequency domain, so the control area can only be limited to one or several sets of resources of the system bandwidth for transmission. Due to the needs of specific application scenarios, for example, only a small number of blind detections are needed to reduce the power consumption, and a large number of blind detections are required to lower the probability of blocking. The embodiments of the present application provide the solutions that the number of candidates for the downlink control channel of the short TTI within the set of resources can be adjusted and how to determine the number of candidates for the downlink control channel of the short TTI within the set of resources. The method mainly comprises the steps of setting the number of downlink control channel candidates through a base station, and determining the number of downlink control channel candidates through a terminal by explicit signaling; or implicitly determining the number of downlink control channel candidates through the terminal.

The terminal described in the embodiments of the present application may also be referred to as UE. The UE can be fixed or mobile. The UE may also be referred to as a mobile station, a user unit, a station and the like. The UE may be a cellular telephone, a personal digital assistant (PDA), a wireless modem, a wireless communication device, a handheld device, a laptop computer, a cordless telephone, a wireless local loop (WLL) station, a tablet and the like. The UE can communicate with network side devices such as a macro eNB, a pico eNB, a femto eNB and a relay station.

The technical solutions provided by the embodiments of the present applications are described in detail below.

The terminal side.

The terminal detects and receives a downlink control channel according to the number, set by a base station, of candidates within the set of resources for transmitting the downlink control channel set by the base station.

The number, set by the base station, of sets of resources for transmitting the downlink control channel is at least one. Of course, a plurality of sets of resources for transmitting the downlink control channel may be set, and the number of candidates in the multiple sets of resources may be different or equal.

The terminal receives downlink control channel candidate indication information sent by the base station (that is, the notification which is sent by the base station and configured to indicate the number of candidates in the at least one set of resources is received), and detects and receives the downlink control channel within the set of resources for transmitting the downlink control channel according to the downlink control channel candidate indication information.

The downlink control channel candidate indication information may be sent by high level signaling, for example, by a radio resource control (RRC) signaling.

The candidate indication information may indicate the number of downlink control channel candidates to the terminal.

For example, the candidate indication information indicates the number of downlink control channel candidates included in each set of resources for transmitting a downlink control channel. For instance, the candidate indication information indicates that there are N candidates for a downlink control channel in CORESET 1, and there are M candidates for a downlink control channel in CORESET 2. N and M are positive integers. Based on this, the terminal determines the number of candidates included in each AL according to a first preset rule. For example, as for CORESET 1, the number of candidates included in each AL accounts for a certain proportion of the total number N of candidates of the downlink control channel, for instance, four types of AL are adopted by the downlink control channel for transmission, the values of AL are 1, 2, 4 and 8 respectively, thus, the candidates with AL=1 accounts for 1/3 of the total number N, the candidates with AL=2 accounts for 1/3 of the total number N, the candidates with AL=4 accounts for 1/6 of the total number N, and the candidate with AL=8 accounts for 1/6 of the total number N. That is, when the number of candidates in each set of resources is indicated in the candidate indication information, the terminal may determine the number of candidates included in each aggregation level in each set of resources according to the number of candidates in each set of resources indicated in the indication information and a first preset rule.

Alternatively, the candidate indication information indicates the number of candidates included in each AL in each set of resources for transmitting the downlink control channel. For example, the number of ALs supported by the downlink control channel is A, assuming that A=4, that is, the value range of AL is assumed to be {A1, A2, A3 and A4}, where A1, A2, A3 and A4 are positive integers. The candidate indication information indicates that the number of candidates in the case of AL=A1 is L1, the number of candidates in the case of AL=A2 is L2, the number of candidates in the case of AL=A3 is L3, and the number of candidates in the case of AL=A4 is L4, where L1, L2, L3 and L4 are each an integer greater than or equal to zero. That is, the terminal needs to blindly detect the downlink control channel according to the number of candidates included in the A types of AL in the case.

Alternatively, the candidate indication information indicates the supported ALs and the number of candidates included in each supported AL in each set of resources for transmitting the downlink control channel. For example, a maximum of A types of ALs are supported in a downlink control channel resource set, assume A=4, and the value range of AL is assumed to be {A1, A2, A3 and A4}, where A1, A2, A3 and A4 are positive integers. Then, a base station indicates the ALs existing in the downlink control channel resource set through 4bit information. Each bit of the 4bit information represents one AL, where 0 means that there is no corresponding AL within the set of resources, and 1 means that there is a corresponding AL within the set of resources. For example, in the 4bit bitmap information, the lowest bit represents A1, the second bit represents A2, the third bit represents A3, and the highest bit represents A4. Then 1000 indicates that there are only candidates with AL=A1 within the set of resources; and for another example, 1111 indicates that there are candidates of four types of AL of A1, A2, A3 and A4 within the set of resources. In this case, the terminal only needs to detect the downlink control channel according to the number of candidates included in the AL indicated by the candidate indication information.

Alternatively, the candidate indication information may be a combination of the above solutions. For example, the candidate indication information indicates the number of candidates included in each CORESET and the supported ALs, and the number of candidates included in each supported AL is determined according to a predefined rule.

In addition, the terminal may also determine the number of candidates within the set of resources implicitly, for example, when the terminal detects and receives the downlink control channel in a time unit (such as a slot or a short TTI (sTTI) or an orthogonal frequency division multiplex (OFDM) symbol), if it is predetermined that the maximum number of candidates supporting detection is K, the terminal proportionally and implicitly obtains the number of candidates included in each CORESET according to the size of the CORESET preset by the base station. That is, the terminal may also determine the number of candidates in the at least one set of resources according to a second preset rule. For example, if the base station only sets one CORESET for the terminal, the terminal considers that the number of candidates included in the CORESET is K; for another example, the base station sets two CORESETs for the terminal, and the CORESET 1 includes Q resource units (such as RBs), the CORESET 2 includes P resource units, and the number of candidates included in the CORESET 1 obtained by the terminal implicitly is $K * \left( \dfrac{Q}{Q+P} \right)$ , and the number of candidates included in the CORESET 2 obtained by the terminal implicitly is $K * \left( \dfrac{P}{Q+P} \right)$.

Similarly, the AL types included in each CORESET can be obtained through any of the foregoing methods.

Similarly, the number of candidates included in each AL in each CORESET can also be obtained through any of the foregoing methods.

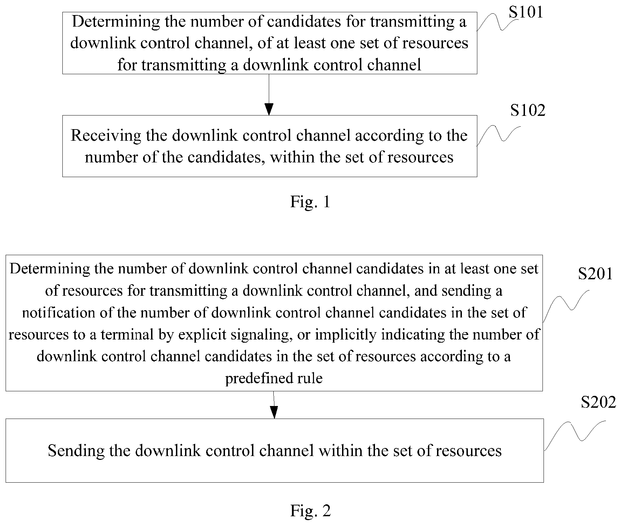

In summary, the embodiments of the present application provide a method for transmitting a downlink control channel on the terminal side (see Fig. 1). The method includes the following operations.

S101, determining the number of candidates for transmitting a downlink control channel, of at least one set of resources for transmitting a downlink control channel.

S102, receiving the downlink control channel according to the number of the candidates within the set of resources.

According to the embodiments of the present application, by determining the number of candidates for transmitting a downlink control channel, of the at least one set of resources for transmitting the downlink control channel and receiving the downlink control channel according to the number of the candidates within the set of resources, the terminal can perform downlink control channel detection and reception according to the number of actual candidates, more flexible transmission of a downlink control channel can be realized, the terminal can perform downlink control channel detection and reception according to the number of actual candidates, the problem that the terminal might perform too many or too few blind downlink control channel detections is avoided, and the actual needs are met.

Optionally, the determining the number of candidates for transmitting a downlink control channel, of at least one set of resources configured for transmitting a downlink control channel includes: receiving a notification which is sent by a base station and configured for indicating the number of candidates in the at least one set of resources, and determining the number of candidates in the at least one set of resources according to the notification.

Optionally, the notification includes at least one of the following information: the number of candidates in each set of resources; the number of candidates included in each aggregation level in each set of resources; or the aggregation levels supported in each set of resources, and the number of candidates included in each supported aggregation level.

Optionally, when the number of candidates in each set of resources is included in the notification, the method further includes: determining the number of candidates included in each aggregation level in each set of resources according to the number of candidates in each set of resources included in the notification and a first preset rule.

Optionally, the determining the number of candidates for transmitting a downlink control channel, of at least one set of resources used for transmitting a downlink control channel specifically includes: determining the number of candidates in the at least one set of resources according to a second preset rule.

Accordingly, on the base station side.

The base station notifies the terminal of the number of downlink control channel candidates in different downlink control channel resource sets.

At least one downlink control channel resource set is provided.

Optionally, the base station notifies the number of downlink control channel candidates in different downlink control channel resource set through high level signaling such as RRC signaling.

The base station notifies the terminal of the number of downlink control channel candidates included in each set of resources for transmitting the downlink control channel. For example, it is indicated that there are N downlink control channel candidates in CORESET 1, and there are M downlink control channel candidates in CORESET 2.

For example, the base station may select to notify the number of candidates in a specific downlink control channel resource set in predefined candidate number sets. For instance, there are C types of the number of candidates in one downlink control channel resource set, and each selection represents a specific integer value greater than zero. For example, if C=4, the possible number of candidates is {12, 24, 36 and 48}. The base station needs to notify the number of downlink control channel candidates in the downlink control channel resource set through $\text{ceil}(\log_2{}^C)$ bit. Take C=4 as an example, 2 bit indication is required, 00 means that there are 12 candidates in CORESET, 01 means that there are 24 candidates in CORESET, 10 means that there are 36 candidates in CORESET, and 11 means that there are 48 candidates in CORESET.

Alternatively, the base station indicates the terminal of the number of candidates included in each AL in each set of resources for transmitting the downlink control channel. For example, the number of ALs supported by the downlink control channel is A, assume A=4, the value range of AL is assumed to be {A1, A2, A3 and A4}. A1, A2, A3 and A4 are positive integers. The notification sent by the base station to the terminal indicates that the number of candidates for AL=A1 is L1, the number of candidates for AL=A2 is L2, the number of candidates for AL=A3 is L3, and the number of candidates for AL=A4 is L4. L1, L2, L3 and L4 are each an integer greater than or equal to zero. That is, the terminal needs to perform blind detection on the downlink control channel according to the AL and the number of candidates included in the AL in the case.

The number of candidates for each AL in different CORESETs is different or equal.

When the number of candidates included in each AL is specifically set, the base station selects the number of candidates from predefined candidate number sets. For example, there are C choices for the number of candidates included in each AL, if C=4, and the possible number of candidates is {12, 24, 36 and 48}. The base station needs to indicate the number of candidates included in each AL through ceil($\log_2^C$)bit, and needs A*ceil($\log_2^C$)bit information for indicating the number of candidates of all AALs.

Alternatively, the base station indicates the terminal of the supported ALs and the number of candidates included in each AL in each set of resources for transmitting the downlink control channel. For example, the supported AL in CORESET 1 is {A1, A2}, where the number of candidates for A1 is L1, the number of candidates for A2 is L2, and the supported AL in CORESET 2 is {A3, A4}, where the number of candidates for A3 is L3, and the number of candidates for A4 is L4. For instance, a maximum of A types of ALs are supported in the downlink control channel resource set, assuming that A=4, then the base station indicates the ALs existing in the downlink control channel resource set through 4bit information. Each bit of the 4bit information represents one AL, where 0 represents that there is no corresponding AL within the set of resources, and 1 represents that there are corresponding ALs within the set of resources. For example, in the 4bit bitmap information, the lowest bit represents A1, the second bit represents A2, the third bit represents A3, the highest bit represents A4, and 1000 indicates that only the candidates of AL=A1 exist within the set of resources; and for another example, 1111 indicates that there are candidates of four types of ALs of A1, A2, A3 and A4 within the set of resources. In this case, the terminal only needs to detect the downlink control channel according to the number of candidates included in the ALs indicated in the candidate indication information.

The number of candidates included in each AL can be notified through the foregoing method, and details are not described herein.

Alternatively, the base station notifies the terminal of the number of downlink control channel candidates in different downlink control channel resource sets through the combination of the foregoing solutions. For example, the base station indicates the terminal of the number of candidates and the supported ALs included in each CORESET, and the number of candidates included in each supported AL is determined in a predefined mode.

In summary, referring to Fig. 2, the embodiments of the present application provide a method for transmitting a downlink control channel on the base station side. The method includes the following operations.

S201, determining the number of downlink control channel candidates in at least one set of resources for transmitting a downlink control channel, and sending, by explicit signaling, a notification of the number of downlink control channel candidates in the set of resources to a terminal, or implicitly indicating, according to a predefined rule, the number of downlink control channel candidates in the set of resources.

S202, sending the downlink control channel within the set of resources.

Optionally, the notification includes at least one of the following information: the number of candidates in each set of resources; the number of candidates included in each aggregation level in each set of resources; or the aggregation levels supported in each set of resources, and the number of candidates included in each supported aggregation level.

Several embodiments are described below for illustration.

Embodiment 1: it is assumed that the base station sets two downlink control channel resource sets for the terminal, such as CORESET 1 and CORESET 2. That is, the terminal needs to detect and receive downlink control channels in subframes in CORESET 1 and CORESET 2. The base station notifies the terminal of the number of downlink control channel candidates in the two sets of resources through RRC signaling. For example, the base station notifies the terminal of the number of candidates of the downlink control channels which need to be blindly detected in the CORESET 1 through RRC signaling; and the base station notifies the terminal the number of candidates of the downlink control channels which need to be blindly detected in the CORESET 2 through the RRC signaling. Suppose there are four possibilities of {12, 24, 36, 48} for the number of candidates in one downlink control channel resource set. The base station needs to notify the number of downlink control channel candidates in the downlink control channel resource set through ceil($\log_2^4$)bit=2bit information. Specific to the assumption of this embodiment, 00 indicates that there are 10 candidates in the CORESET, 01 indicates that there are 20 candidates in the CORESET, 10 indicates that there are 30 candidates in the CORESET, and 11 indicates that there are 40 candidates in the CORESET. As shown in Table 1 below.

Table 1: Candidate number indication information field meaning

| Indication bit | Meaning |
| --- | --- |
| 00 | the downlink control channel resource set includes 12 candidates |
| 01 | the downlink control channel resource set includes 24 candidates |
| 10 | the downlink control channel resource set includes 36 candidates |
| 11 | the downlink control channel resource set includes 48 candidates |

For example, if the number of candidates in CORESET 1 is 00, it means that there are 12 candidates in CORESET 1; and if the number of candidates in CORESET 2 is 11, it means that there are 48 candidates in CORESET 2. The terminal detects and receives the downlink control channels in the CORESET according to the number of candidates included in the CORESET and notified by the base station and the predefined number of candidates included in each AL. Further, it is assumed that there are four types of ALs supported by the candidates in each CORESET, namely A1, A2, A3 and A4, the numbers of candidates included in all the ALs are proportionally distributed, for example, the number of candidates included in A1 accounts for 1/3 of the total number of candidates, A2 accounts for 1/3, A3 accounts for 1/6, and A4 accounts for 1/6. In the embodiments, the numbers of candidates included in each all the ALs which need to be detected and received through the terminal in CORESET 1 and CORESET 2 are shown in Table 2 below.

Table 2: The number of candidates of ALs in CORESET 1 and CORESET2 of Embodiment 1

| CORESET 1 | | CORESET 2 | |
|---|---|---|---|
| **AL** | **Candidate number** | **AL** | **Candidate number** |
| AL=A1 | 4 | AL=A1 | 16 |
| AL=A2 | 4 | AL=A2 | 16 |
| AL=A3 | 2 | AL=A3 | 8 |
| AL=A4 | 2 | AL=A4 | 8 |

Embodiment 2: it is assumed that the base station sets two downlink control channel resource sets for the terminal, namely CORESET 1 and CORESET 2, that is, the terminal needs to detect and receive the downlink control channels in subframes in CORESET 1 and CORESET 2. The base station notifies the terminal of the number of candidates included in each AL in the two sets of resources through RRC signaling. For example, the number of ALs supported by the downlink control channel is A. According to the embodiment, assume A=4, that is, AL is {A1, A2, A3, A4}. The candidate indication information indicates that the number of candidates in the case of AL=A1 is L1, the number of candidates in the case of AL=A2 is L2, the number of candidates in the case of AL=A3 is L3, and the number of candidates in the case of AL=A4 is L4. When the number of candidates included in each AL is specifically set, the base station selects the number of candidates from predefined candidate number sets. For example, the number C of candidates included in each AL has 4 choices, if C=4, the possible number of candidates is {12, 24, 36, 48}, the base station needs to indicate the number of candidates included in each AL by ceil($\log_2 4$)bit=2bit. The numbers of candidates of all the 4 (A=4) ALs are indicated through 4*ceil($\log_2 4$)bit=8bit information for indicating the number (b1, b2, b3, b4, b5, b6, b7, b8) of candidates included in each AL. Wherein the combination of b1 and b2 indicates the number of candidates included in AL when AL=A1, the combination of b3 and b4 indicates the number of candidates included in AL when AL=A2, the combination of b5 and b6 indicates the number of candidates included in AL when AL=A3, and the combination of b7 and b8 indicates the number of candidates included in AL when AL=A1. The meanings of the two-bit information indicating the number of candidates included in each AL are shown in Table 1. For instance, if the indication information indicating the number of candidates and carried by the base station through the high level signaling is 11010010, it is expressed as follows.

In the specified downlink control channel resource set, the numbers of candidates needing to be detected and received by the terminal are: there are 48 candidates when AL=A1, there are 24 candidates when AL=A2, there are 12 candidates when AL=A3, and there are 36 candidates when AL=A4.

The terminal receives the candidate number indication information sent by the base station, and detects and receives the downlink control channel in CORESET1 and CORESET2 according to the indication information.

Embodiment 3: it is assumed that the base station sets two downlink control channel resource sets for the terminal, namely CORESET 1 and CORESET 2, that is, the terminal needs to detect and receive the downlink control channels in subframes in CORESET 1 and CORESET 2. The base station notifies the terminal of the types of ALs and the number of candidates included in each AL in the two sets of resources through RRC signaling. For example, the number of ALs supported in CORESET 1 is {A1, A2}, wherein the number of candidates for A1 is L1, and the number of candidates for A2 is L2; and the ALs supported in CORESET 2 is {A3, A4}, wherein the number of candidates for A3 is L3, and the number of candidates for A4 is L4. For instance, a maximum of A types of ALs are supported in the downlink control channel sets of resources, assume A=4, the base station indicates the ALs existing in the downlink control channel sets of resources through 4bit information. Each bit of the 4bit information represents one AL, wherein 0 means that there is no corresponding AL within the set of resources, and 1 means that there is a corresponding AL within the set of resources. For example, in the 4bit bitmap information, the lowest bit represents A1, the second bit represents A2, the third bit represents A3, and the highest bit represents A4. Then 1000 indicates that there are only candidates with AL=A1 within the sets of resources; and for another example, 1111 indicates that there are candidates of four types of ALs of A1, A2, A3 and A4 within the sets of resources. The specific meanings of bitmap are shown in Table 3 below.

Table 3: Meaning of bitmap indicating ALs in CORESET

| Bitmap | Meaning |
|--------|---------|
| 1000 | There are only candidates of AL=A1 in the CORESET |
| 1100 | There are only candidates of AL=A1 and AL=A2 in the CORESET |
| 1110 | There are only candidates of AL=A1, AL=A2 and AL=A3 in the CORESET |
| 1111 | There are only candidates of AL=A1, AL=A2, AL=A3 and AL=A4 in the CORESET |
| 0100 | There are only candidates of AL=A2 in the CORESET |
| 0110 | There are only candidates of AL=A2 and AL=A3 in the CORESET |
| 0111 | There are only candidates of AL=A2, AL=A3 and AL=A4 in the CORESET |
| 0010 | There are only candidates of AL=A3 in the CORESET |
| 0011 | There are only candidates of AL=A3 and AL=A4 in the CORESET |
| 0001 | There are only candidates of AL=A4 in the CORESET |

The base station indicates the number of candidates included in each AL in the modes of Embodiment 2, and details are not described herein again.

The terminal detects and receives the downlink control channels in CORESET1 and CORESET2 according to the ALs included in CORESET1 and CORESET2 notified by the base station and the number of candidates included in each AL.

Embodiment 4: it is assumed that the terminal supports at most K candidates when detecting and receiving a downlink control channel in a certain time unit. The certain time unit may be one slot or one sTTI or one OFDM symbol. In the present embodiment, it is assumed that K=36. The base station sets at least one CORESET for the terminal to transmit the downlink control channel. The terminal proportionally and implicitly obtains the number of candidates included in each CORESET according to the size of the CORESET set by the base station. For example, if the base station only sets one CORESET for the terminal, the terminal considers that the number of candidates included in the CORESET is K; and for another example, the base station sets two CORESETs for the terminal, CORESET1 includes Q resource units (such as RBs), CORESET2 includes P resource units, the terminal implicitly obtains the number of candidates included in CORESET1 being $K * \left( \dfrac{Q}{Q+P} \right)$, and the terminal implicitly obtains the number of candidates included in CORESET2 being $K * \left( \dfrac{P}{Q+P} \right)$.

It is assumed that the base station only sets one CORESET for the terminal, the terminal determines that the number of candidates included in the CORESET is K=36. Specifically, the ALs included in the CORESET and the number of candidates included in each AL may be determined by any of the methods in Embodiments 1 to 3, and details are not described herein again.

Then it is assumed that the base station sets two CORESETs for the terminal, namely CORESET1 and CORESET2, CORESET1 contains 10 RBs, and CORESET2 contains 20 RBs. The terminal determines that 12 candidates in CORESET1 need to be detected and received and 24 candidates in CORESET2 need to be detected and received according to the foregoing formula. Specifically, the AL included in each CORESET and the number of candidates included in each AL may be determined by any of the methods in Embodiments 1 to 3, and details are not described herein again.

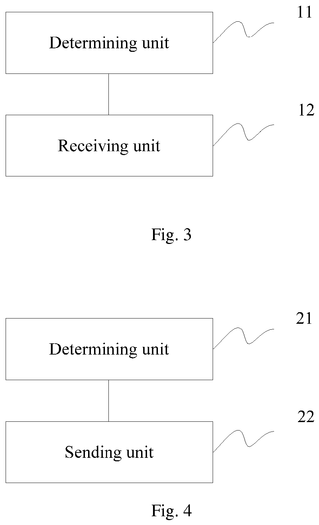

Corresponding to the terminal side method, referring to Fig. 3, the embodiments of the present application provide a device for transmitting a downlink control channel. The device includes: a determining unit 11, configured for determining the number of candidates for transmitting a downlink control channel, of at least one set of resources configured for transmitting a downlink control channel; and a receiving unit 12, configured for receiving the downlink control channel according to the number of the candidates within the at least one set of resources.

Optionally, the determining unit 11 is further configured for: receiving a notification which is sent by a base station and used for indicating the number of candidates in the at least one set of resources, and determining the number of candidates in the at least one set of resources according to the notification.

Optionally, the notification includes at least one of the following information: the number of candidates in each set of resources; the number of candidates included in each aggregation level in each set of resources; or the aggregation levels supported in each set of resources, and the number of candidates included in each supported aggregation level.

Optionally, when the notification includes the number of candidates in each set of resources, the determining unit 11 is further configured for: determining the number of candidates included in each aggregation level in each set of resources according to the number of candidates in each set of resources included in the notification and a first preset rule.

Optionally, the determining unit 11 is configured for determining the number of candidates in the at least one set of resources according to a second preset rule.

Corresponding to the method on the base station side, the embodiments of the present application provide a device for transmitting a downlink control channel. The device includes: a determining unit 21, configured for determining the number of downlink control channel candidates in the at least one set of resources for transmitting a downlink control channel, and sending a notification of the number of downlink control channel candidates in the set of resources to a terminal by explicit signaling, or implicitly indicating the number of downlink control channel candidates in the set of resources according to a predefined rule; and a sending unit 22, configured for sending a downlink control channel within the at least one set of resources.

Optionally, the notification includes at least one of the following information: the number of candidates in each set of resources; the number of candidates included in each aggregation level in each set of resources; or aggregation levels supported in each set of resources, and the number of candidates included in each supported aggregation level.

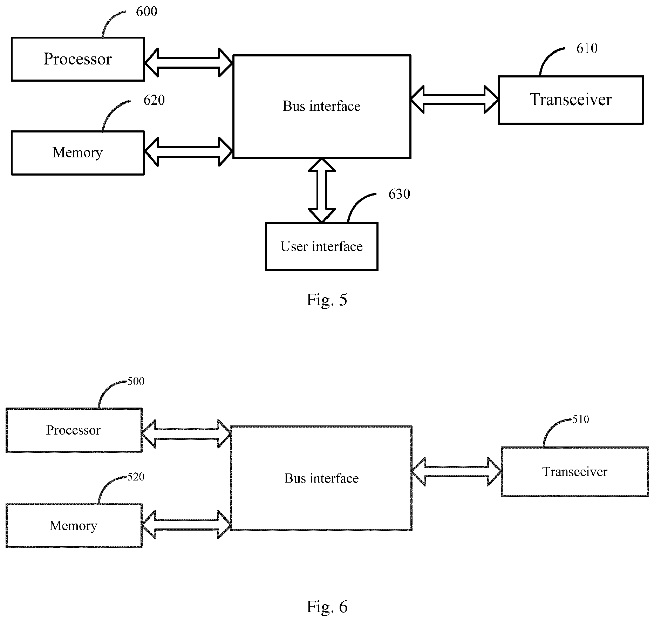

The following description of Fig. 5 and Fig. 6 is not part of the present invention.

Another device for transmitting a downlink control channel provided by the embodiments of the present application on the terminal side shown in Fig. 5 includes a processor 600, a memory 620 and a transceiver.

The processor 600 is configured for reading programs in the memory 620 and performing the following procedures: determining the number of candidates for transmitting a downlink control channel, of at least one set of resources for transmitting a downlink control channel; and receiving the downlink control channel through a transceiver 610 according to the number of the candidates within the sets of resources.

Optionally, the processor 600 receives a notification which is sent by the base station through the transceiver 610 and used for indicating the number of candidates in the at least one set of resources, and determines the number of candidates within the at least one set of resources according to the notification.

Optionally, the notification comprises at least one of the following information: the number of candidates in each set of resources; the number of candidates included in each aggregation level in each set of resources; or aggregation levels supported in each set of resources, and the number of candidates included in each supported aggregation level.

Optionally, when the number of candidates in each set of resources is included in the notification, the processor 600 is further configured for determining the number of candidates included in each aggregation level in each set of resources according to the number of candidates in each set of resources included in the notification and a first preset rule.

Optionally, the processor 600 may also determine the number of candidates within the at least one set of resources according to a second preset rule.

The transceiver 610 is configured for receiving and sending data under control of the processor 600.

As shown in Fig. 5, a bus architecture may comprise any number of interconnected buses and bridges, and is specifically connected by one or more processors represented by the processor 600 and various circuits of memories represented by the memory 620. The bus architecture can also connect various other circuits such as peripheral equipment, voltage stabilizers and power management circuits, which are well known in the art and therefore will not be further described herein. A bus interface provides an interface. The transceiver 610 can be a plurality of components comprising a transmitter and a receiver, and provides units for communicating with various other devices on a transmission medium. For different user equipment, a user interface 630 may also be an interface capable of being connected with required equipment externally and internally, including but not limited to a keypad, a display, a loudspeaker, a microphone and a joystick.

The processor 600 is responsible for managing the bus architecture and general processing, and the memory 620 can store data used by the processor 600 during operation performing.

Optionally, the processor 600 can be a central processing unit (CPU), an application specific integrated circuit (ASIC), a field-programmable gate array (FPGA) or a complex programmable logic device (CPLD).

As shown in Fig. 6, the embodiments of the present application provide a device for transmitting a downlink control channel on the base station side, comprising: a processor 500 configured for reading programs in the memory 520, and performing the following processes: determining the number of candidates for a downlink control channel, of at least one set of resources for transmitting a downlink control channel, and sending a notification of the number of downlink control channel candidates in the set of resources to a terminal through the transceiver 510 by explicit signaling, or implicitly indicating the number of downlink control channel candidates in the set of resources according to a predefined rule; and sending the downlink control channel through the transceiver 510 within the set of resources.

Optionally, the notification includes at least one of the following information: the number of candidates in each set of resources; the number of candidates included in each aggregation level in each set of resources; or aggregation levels supported in each set of resources, and the number of candidates included in each supported aggregation level.

The device further comprises the transceiver 510, used for receiving and sending data under control of the processor 500.

As shown in Fig. 6, the bus architecture may comprise any number of interconnected buses and bridges, and is specifically connected by one or more processors represented by the processor 500 and various circuits of memories represented by the memory 520. The bus architecture can also connect various other circuits such as peripheral equipment, voltage stabilizers and power management circuits, which are well known in the art and therefore will not be further described herein. A bus interface provides an interface. The transceiver 510 can be a plurality of components comprising a transmitter and a receiver, and provides units for communicating with various other devices on a transmission medium. The processor 500 is responsible for managing the bus architecture and general processing, and the memory 520 can store data used by the processor 500 when performing operations.

The processor 500 can be a CPU, an ASIC, an FPGA or a CPLD.

The embodiments of the present application disclose a readable storage medium which comprises program codes, when the program codes run on computing equipment, the program codes are used for enabling the computing equipment to carry out the steps performed by the downlink channel transmitting device on the terminal side.

The embodiments of the present application disclose another readable storage medium which comprises program codes, when the program codes run on the computing equipment, the program codes are used for enabling the computing equipment to carry out the steps performed by the downlink channel transmitting device on the base station side.

Those skilled in the art should understand that embodiments of the present application can be provided as a method, a system or a computer program product. Thus, the present application can take the form of a complete hardware embodiment, a complete software embodiment or an embodiment in combination of software and hardware. Moreover, the present application can take the form of a computer program product embodied on one or more computer-usable storage media (including but not limited to disk storages and optical storages) containing computer usable program codes.

The present application is described with reference to flow diagrams and/or block diagrams of methods, devices (system) and computer program products according to the embodiments of the present application. It should be understood that each flow and/or block of the flow diagrams and/or the block diagrams and combination of the flows and/or blocks of the flow diagrams and/or the block diagrams can be implemented by computer program instructions. A processor capable of inputting the computer program instructions to a general purpose computer, a special purpose computer, an embedded processor or other programmable data processing equipment, so that a machine is formed, and a device for achieving specified functions in one or more flows of the flow diagram and/or one or more blocks of the block diagrams is formed through execution of instructions by a computer or a processor of other programmable data processing equipment.

The computer program instructions can also be stored in a computer readable memory that can direct a computer or other programmable data processing equipment to operate in a particular mode, so that the instructions stored in the computer readable memory produce a manufactured article comprising an instruction device. The instruction device achieves specified functions in one or more flows of the flow diagram and/or one or more blocks of the block diagrams.

These computer program instructions can also be loaded onto a computer or other programmable data processing equipment, thus, a series of operational steps are performed on the computer or the other programmable equipment, and computer implementation processing is achieved, so that the instructions performed on the computer or the other programmable instructions provide steps for achieving the functions specified in one or more flow of the flow diagrams and/or one or more blocks of the block diagrams.

## Claims

1. A method for receiving a downlink control channel, comprising:

   determining (S101) a quantity of candidates for transmitting a downlink control channel, of at least one set of resources for transmitting a downlink control channel; and
   receiving (S102) the downlink control channel according to the quantity of the candidates within the at least one set of resources;
   wherein the determining (S101) the quantity of candidates for transmitting a downlink control channel, of the at least one set of resources for transmitting a downlink control channel comprises:

receiving a notification sent by a base station and used for indicating the quantity of candidates within the at least one set of resources; and

determining the quantity of candidates within the at least one set of resources according to the notification; wherein the notification comprises at least one of following information:

a quantity of candidates in each set of resources;
a quantity of candidates comprised in each aggregation level in at least two sets of resources; or
aggregation levels supported in each set of resources, and a quantity of candidates comprised in each supported aggregation level;

when the notification comprises the quantity of candidates in each set of resources, the method further comprises: determining a quantity of candidates comprised in each aggregation level in each set of resources according to the quantity of candidates in each set of resources comprised in the notification and a first preset rule, wherein the first preset rule indicates a proportion of the quantity of candidates comprised in the each aggregation level in the each set of resources to a total quantity of candidates of the downlink control channel; or

wherein the determining (S101) the quantity of candidates for transmitting a downlink control channel, of the at least one set of resources for transmitting a downlink control channel further comprises:

determining the quantity of candidates in the at least one set of resources according to a second preset rule, wherein the second preset rule comprises:

a quantity of candidates contained in the j-th set of resources is

$$K * \left( \frac{x_j}{\sum_{i=a}^{N} x_i} \right),$$

wherein N is a quantity of sets of resources configured by a base station for a terminal;
$x_i$ is a quantity of resource units contained in the i-th set of resources;
$x_j$ is a quantity of resource units contained in the j-th set of resources;
K is a quantity of maximum candidates for detection when the terminal detects and receives the downlink control channel in a time unit.

2. A method for transmitting a downlink control channel, comprising:

determining (S201) a quantity of downlink control channel candidates in at least one set of resources for transmitting a downlink control channel; and sending a notification of the quantity of downlink control channel candidates in the at least one set of resources to a terminal by explicit signaling, or implicitly indicating the quantity of downlink control channel candidates in the set of resources according to a predefined rule; and

sending (S202) a downlink control channel within the at least one set of resources;
wherein the notification comprises at least one of following information:

a quantity of candidates in each set of resources;
a quantity of candidates comprised in each aggregation level in at least two setsof resources; or
aggregation levels supported in each set of resources, and a quantity of candidates included in each supported aggregation level;

when the notification comprises the quantity of candidates in each set of resources, the method further comprises: indicating a quantity of candidates comprised in each aggregation level in each set of resources to the terminal according to a first preset rule, wherein the first preset rule indicates a proportion of the quantity of candidates comprised in the each aggregation level in the each set of resources to a total quantity of candidates of the downlink control channel; or

indicating the quantity of candidates in the at least one set of resources to the terminal according to a second preset rule,
wherein the second preset rule comprises:

a quantity of candidates contained in the j-th set of resources is

$$K * \left( \frac{x_j}{\sum_{i=1}^{N} x_i} \right),$$

wherein N is a quantity of sets of resources configured by a base station for the terminal;
$x_i$ is a quantity of resource units contained in the i-th set of resources;
$x_j$ is a quantity of resource units contained in the j-th set of resources;
K is a quantity of maximum candidates for detection when the terminal detects and receives the downlink control channel in a time unit.

3.   A device for receiving a downlink control channel, comprising:

a determining unit (11), configured to determine a quantity of candidates for transmitting a downlink control channel, of at least one set of resources for transmitting a downlink control channel; and
a receiving unit (12), configured to receive the downlink control channel according to the quantity of the candidates within the at least one set of resources;
wherein the determining unit (11) is further configured to:

receive a notification sent by a base station and used for indicating the quantity of candidates in the at least one set of resources; and
determine the quantity of candidates within the at least one set of resources according to the notification;
wherein the notification comprises at least one of following information:

a quantity of candidates in each set of resources;
a quantity of candidates comprised in each aggregation level in at least two setsof resources; or
aggregation levels supported in each set of resources, and a quantity of candidates included in each supported aggregation level;

wherein when the notification comprises the quantity of candidates in each set of resources, the determining unit (11) is further configured to:
determine a quantity of candidates comprised in each aggregation level in each set of resources according to the quantity of candidates comprised in each set of resources in the notification and a first preset rule, wherein the first preset rule indicates a proportion of the quantity of candidates comprised in the each aggregation level in the each set of resources to a total quantity of candidates of the downlink control channel; or
wherein the determining unit (11) is further configured to determine the quantity of candidates in the at least one set of resources according to a second preset rule,
wherein the second preset rule comprises:

a quantity of candidates contained in the j-th set of resources is

$$K * \left( \frac{x_j}{\sum_{i=1}^{N} x_i} \right),$$

wherein N is a quantity of sets of resources configured by a base station for a terminal;
$x_i$ is a quantity of resource units contained in the i-th set of resources;
$x_j$ is a quantity of resource units contained in the j-th set of resources;
K is a quantity of maximum candidates for detection when the terminal detects and receives the downlink control channel in a time unit.

4.   A device for transmitting a downlink control channel, comprising:

a determining unit (21), configured to determine a quantity of downlink control channel candidates in the at least one set of resources for transmitting a downlink control channel, and send a notification of the quantity of downlink control channel candidates in the at least one set of resources to a terminal by explicit signaling, or implicitly indicating the quantity of downlink control channel candidates in the set of resources according to a predefined rule; and

a sending unit (22), configured to send a downlink control channel within the at least one set of resources;
wherein the notification comprises at least one of following information:

a quantity of candidates in each set of resources;
a quantity of candidates comprised in each aggregation level in at least two setsof resources; or
aggregation levels supported in each set of resources, and a quantity of candidates included in each supported aggregation level;
wherein the determining unit (21) is further configured to, when the notification comprises the quantity of candidates in each set of resources, indicate a quantity of candidates comprised in each aggregation level in each set of resources to the terminal according to a first preset rule, wherein the first preset rule indicates a proportion of the quantity of candidates comprised in the each aggregation level in the each set of resources to a total quantity of candidates of the downlink control channel; or
the determining unit (21) is further configured to indicates the quantity of candidates in the at least one set of resources to the terminal according to a second preset rule,
wherein the second preset rule comprises:

a quantity of candidates contained in the j-th set of resources is

$$K * \left( \frac{x_j}{\sum_{i=1}^{N} x_i} \right),$$

wherein N is a quantity of sets of resources configured by a base station for the terminal;
$x_i$ is a quantity of resource units contained in the i-th set of resources;
$x_j$ is a quantity of resource units contained in the j-th set of resources;
K is a quantity of maximum candidates for detection when the terminal detects and receives the downlink control channel in a time unit.

5. A computer-readable storage medium comprising instructions, which, when executed on a computer, cause the computer to perform the method of claim 1 or 2.

**Patentansprüche**

1. Verfahren zum Empfangen eines Downlink-Steuerkanals, das umfasst:

Bestimmen (S101) einer Menge von Kandidaten zum Übertragen eines Downlink-Steuerkanals mindestens eines Satzes von Ressourcen zum Übertragen eines Downlink-Steuerkanals; und
Empfangen (S102) des Downlink-Steuerkanals gemäß der Menge der Kandidaten in dem mindestens einen Satz von Ressourcen;
wobei das Bestimmen (S101) der Menge von Kandidaten zum Übertragen eines Downlink-Steuerkanals des mindestens einen Satzes von Ressourcen zum Übertragen eines Downlink-Steuerkanals umfasst:

Empfangen einer Benachrichtigung, die von einer Basisstation gesendet wird und zum Angeben der Menge von Kandidaten in dem mindestens einen Satz von Ressourcen verwendet wird; und
Bestimmen der Menge von Kandidaten in dem mindestens einen Satz von Ressourcen gemäß der Benachrichtigung;
wobei die Benachrichtigung mindestens eine der folgenden Informationen umfasst:

eine Menge von Kandidaten in jedem Satz von Ressourcen;
eine Menge von Kandidaten, die in jeder Ansammlungsstufe in mindestens zwei Sätzen von Ressourcen enthalten sind; oder
Ansammlungsstufen, die in jedem Satz von Ressourcen unterstützt werden, und eine Menge von Kandidaten, die in jeder unterstützten Ansammlungsstufe enthalten sind; wenn die Benachrichtigung die Menge von Kandidaten in jedem Satz von Ressourcen umfasst, umfasst das Verfahren ferner:
Bestimmen einer Menge von Kandidaten, die in jeder Ansammlungsstufe in jedem Satz von Ressourcen enthalten sind, gemäß der Menge von Kandidaten in jedem Satz von Ressourcen, die in der Benachrichtigung enthalten sind, und einer ersten voreingestellten Regel, wobei die erste voreingestellte Regel ein Verhältnis der Menge von Kandidaten, die in jeder Ansammlungsstufe in jedem Satz von Ressourcen enthalten sind, zu einer Gesamtmenge von Kandidaten des Downlink-Steuerkanals angibt; oder

wobei das Bestimmen (S101) der Menge von Kandidaten zum Übertragen eines Downlink-Steuerkanals des mindestens einen Satzes von Ressourcen zum Übertragen eines Downlink-Steuerkanals ferner umfasst:
Bestimmen der Menge von Kandidaten in dem mindestens einen Satz von Ressourcen gemäß einer zweiten voreingestellten Regel,
wobei die zweite voreingestellte Regel umfasst:

eine Menge von Kandidaten, die in dem j-ten Satz von Ressourcen enthalten sind, ist $K * \left( \frac{xj}{\sum_{i=1}^{N} xi} \right)$,
wobei N eine Menge von Sätzen von Ressourcen ist, die von einer Basisstation für ein Endgerät konfiguriert werden;
$x_i$ eine Menge von Ressourceneinheiten ist, die in dem i-ten Satz von Ressourcen enthalten sind;
$x_j$ eine Menge von Ressourceneinheiten ist, die in dem j-ten Satz von Ressourcen enthalten sind;
K eine Menge maximaler Kandidaten für Detektion ist, wenn das Endgerät den Downlink-Steuerkanal in einer Zeiteinheit detektiert und empfängt.

2. Verfahren zum Übertragen eines Downlink-Steuerkanals, das umfasst:

Bestimmen (S201) einer Menge von Downlink-Steuerkanalkandidaten in mindestens einem Satz von Ressourcen zum Übertragen eines Downlink-Steuerkanals; und Senden einer Benachrichtigung der Menge von Downlink-Steuerkanalkandidaten in dem mindestens einen Satz von Ressourcen an ein Endgerät durch explizites Signalisieren oder implizites Angeben der Menge von Downlink-Steuerkanalkandidaten in dem Satz von Ressourcen gemäß einer vordefinierten Regel; und
Senden (S202) eines Downlink-Steuerkanals in dem mindestens einen Satz von Ressourcen;
wobei die Benachrichtigung mindestens eine der folgenden Informationen umfasst:

eine Menge von Kandidaten in jedem Satz von Ressourcen;
eine Menge von Kandidaten, die in jeder Ansammlungsstufe in mindestens zwei Sätzen von Ressourcen enthalten sind; oder
Ansammlungsstufen, die in jedem Satz von Ressourcen unterstützt werden, und eine Menge von Kandidaten, die in jeder unterstützten Ansammlungsstufe enthalten sind;
wenn die Benachrichtigung die Menge von Kandidaten in jedem Satz von Ressourcen umfasst, umfasst das Verfahren ferner: dem Endgerät Angeben einer Menge von Kandidaten, die in jeder Ansammlungsstufe in jedem Satz von Ressourcen enthalten sind, gemäß einer ersten voreingestellten Regel, wobei die erste voreingestellte Regel ein Verhältnis der Menge von Kandidaten, die in jeder Ansammlungsstufe in jedem Satz von Ressourcen enthalten sind, zu einer Gesamtmenge von Kandidaten des Downlink-Steuerkanals angibt; oder
dem Endgerät Angeben der Menge von Kandidaten in dem mindestens einen Satz von Ressourcen gemäß einer zweiten voreingestellten Regel,
wobei die zweite voreingestellte Regel umfasst:

eine Menge von Kandidaten, die in dem j-ten Satz von Ressourcen enthalten sind, ist $K * \left( \frac{xj}{\sum_{i=1}^{N} xi} \right)$,
wobei N eine Menge von Sätzen von Ressourcen ist, die von einer Basisstation für das Endgerät konfiguriert werden;
$x_i$ eine Menge von Ressourceneinheiten ist, die in dem i-ten Satz von Ressourcen enthalten sind;
$x_j$ eine Menge von Ressourceneinheiten ist, die in dem j-ten Satz von Ressourcen enthalten sind;
K eine Menge maximaler Kandidaten für Detektion ist, wenn das Endgerät den Downlink-Steuerkanal in einer Zeiteinheit detektiert und empfängt.

3. Vorrichtung zum Empfangen eines Downlink-Steuerkanals, die aufweist:

eine Bestimmungseinheit (11), die dazu ausgelegt ist, eine Menge von Kandidaten zum Übertragen eines Downlink-Steuerkanals mindestens eines Satzes von Ressourcen zum Übertragen eines Downlink-Steuerkanals zu bestimmen; und

eine Empfangseinheit (12), die dazu ausgelegt ist, den Downlink-Steuerkanal gemäß der Menge der Kandidaten in dem mindestens einen Satz von Ressourcen zu empfangen;

wobei die Bestimmungseinheit (11) ferner dazu ausgelegt ist:

eine Benachrichtigung zu empfangen, die von einer Basisstation gesendet wird und zum Angeben der Menge von Kandidaten in dem mindestens einen Satz von Ressourcen verwendet wird; und
die Menge von Kandidaten in dem mindestens einen Satz von Ressourcen gemäß der Benachrichtigung zu bestimmen;

wobei die Benachrichtigung mindestens eine der folgenden Informationen umfasst:

eine Menge von Kandidaten in jedem Satz von Ressourcen;
eine Menge von Kandidaten, die in jeder Ansammlungsstufe in mindestens zwei Sätzen von Ressourcen enthalten sind; oder
Ansammlungsstufen, die in jedem Satz von Ressourcen unterstützt werden, und eine Menge von Kandidaten, die in jeder unterstützten Ansammlungsstufe enthalten sind;

wobei, wenn die Benachrichtigung die Menge von Kandidaten in jedem Satz von Ressourcen umfasst, die Bestimmungseinheit (11) ferner dazu ausgelegt ist:
eine Menge von Kandidaten, die in jeder Ansammlungsstufe in jedem Satz von Ressourcen enthalten sind, gemäß der Menge von Kandidaten, die in jedem Satz von Ressourcen in der Benachrichtigung enthalten sind, und einer ersten voreingestellten Regel zu bestimmen, wobei die erste voreingestellte Regel ein Verhältnis der Menge von Kandidaten, die in jeder Ansammlungsstufe in jedem Satz von Ressourcen enthalten sind, zu einer Gesamtmenge von Kandidaten des Downlink-Steuerkanals angibt; oder
wobei die Bestimmungseinheit (11) ferner dazu ausgelegt ist, die Menge von Kandidaten in dem mindestens einen Satz von Ressourcen gemäß einer zweiten voreingestellten Regel zu bestimmen,
wobei die zweite voreingestellte Regel umfasst:

eine Menge von Kandidaten, die in dem j-ten Satz von Ressourcen enthalten sind, ist $K * \left( \frac{x_j}{\sum_{i=1}^{N} x_i} \right)$,
wobei N eine Menge von Sätzen von Ressourcen ist, die von einer Basisstation für ein Endgerät konfiguriert werden;
$x_i$ eine Menge von Ressourceneinheiten ist, die in dem i-ten Satz von Ressourcen enthalten sind;
$x_j$ eine Menge von Ressourceneinheiten ist, die in dem j-ten Satz von Ressourcen enthalten sind;
K eine Menge maximaler Kandidaten für Detektion ist, wenn das Endgerät den Downlink-Steuerkanal in einer Zeiteinheit detektiert und empfängt.

4. Vorrichtung zum Übertragen eines Downlink-Steuerkanals, die aufweist:

eine Bestimmungseinheit (21), die dazu ausgelegt ist, eine Menge von Downlink-Steuerkanalkandidaten in dem mindestens einen Satz von Ressourcen zum Übertragen eines Downlink-Steuerkanals zu bestimmen und eine Benachrichtigung der Menge von Downlink-Steuerkanalkandidaten in dem mindestens einen Satz von Ressourcen an ein Endgerät zu senden durch explizites Signalisieren oder implizites Angeben der Menge von Downlink-Steuerkanalkandidaten in dem Satz von Ressourcen gemäß einer vordefinierten Regel; und
eine Sendeeinheit (22), die dazu ausgelegt ist, einen Downlink-Steuerkanal in dem mindestens einen Satz von Ressourcen zu senden;
wobei die Benachrichtigung mindestens eine der folgenden Informationen umfasst:

eine Menge von Kandidaten in jedem Satz von Ressourcen;
eine Menge von Kandidaten, die in jeder Ansammlungsstufe in mindestens zwei Sätzen von Ressourcen enthalten sind; oder
Ansammlungsstufen, die in jedem Satz von Ressourcen unterstützt werden, und eine Menge von Kandidaten, die in jeder unterstützten Ansammlungsstufe enthalten sind;
wobei die Bestimmungseinheit (21) ferner dazu ausgelegt ist, wenn die Benachrichtigung die Menge von Kandidaten in jedem Satz von Ressourcen umfasst, eine Menge von Kandidaten, die in jeder Ansammlungsstufe in jedem Satz von Ressourcen enthalten sind, dem Endgerät gemäß einer ersten voreingestellten Regel anzugeben, wobei die erste voreingestellte Regel ein Verhältnis der Menge von Kandidaten, die in jeder Ansammlungsstufe in jedem Satz von Ressourcen enthalten sind, zu einer Gesamtmenge von Kandidaten des Downlink-Steuerkanals angibt; oder

die Bestimmungseinheit (21) ferner dazu ausgelegt ist, dem Endgerät die Menge von Kandidaten in dem mindestens einen Satz von Ressourcen gemäß einer zweiten voreingestellten Regel anzugeben, wobei die zweite voreingestellte Regel umfasst:

eine Menge von Kandidaten, die in dem j-ten Satz von Ressourcen enthalten sind, ist $K * \left( \frac{xj}{\sum_{i=1}^{N} xi} \right)$,
wobei N eine Menge von Sätzen von Ressourcen ist, die von einer Basisstation für das Endgerät konfiguriert werden;
$x_i$ eine Menge von Ressourceneinheiten ist, die in dem i-ten Satz von Ressourcen enthalten sind;
$x_j$ eine Menge von Ressourceneinheiten ist, die in dem j-ten Satz von Ressourcen enthalten sind;
K eine Menge maximaler Kandidaten für Detektion ist, wenn das Endgerät den Downlink-Steuerkanal in einer Zeiteinheit detektiert und empfängt.

**5.** Computerlesbares Speichermedium, das Anweisungen aufweist, die bei Ausführung auf einem Computer bewirken, dass der Computer das Verfahren nach Anspruch 1 oder 2 durchführt.

**Revendications**

**1.** Procédé de réception d'un canal de commande en liaison descendante, comprenant :

la détermination (S101) d'une quantité de candidats pour transmettre un canal de commande en liaison descendante, d'au moins un ensemble de ressources pour transmettre un canal de commande en liaison descendante ; et
la réception (S102) du canal de commande en liaison descendante en fonction de la quantité des candidats à l'intérieur de l'au moins un ensemble de ressources ;
la détermination (S101) de la quantité de candidats pour transmettre un canal de commande en liaison descendante, de l'au moins un ensemble de ressources pour transmettre un canal de commande en liaison descendante comprenant :

la réception d'une notification envoyée par une station de base et utilisée pour indiquer la quantité de candidats à l'intérieur de l'au moins un ensemble de ressources ; et
la détermination de la quantité de candidats à l'intérieur de l'au moins un ensemble de ressources en fonction de la notification ;
la notification comprenant au moins une des informations suivantes :

une quantité de candidats dans chaque ensemble de ressources ;
une quantité de candidats comprise dans chaque niveau d'agrégation dans au moins deux ensembles de ressources ; ou
des niveaux d'agrégation pris en charge dans chaque ensemble de ressources, et une quantité de candidats comprise dans chaque niveau d'agrégation pris en charge ;
lorsque la notification comprend la quantité de candidats dans chaque ensemble de ressources, le procédé comprend en outre :

la détermination d'une quantité de candidats comprise dans chaque niveau d'agrégation dans chaque ensemble de ressources en fonction de la quantité de candidats dans chaque ensemble de ressources comprise dans la notification et d'une première règle prédéfinie, la première règle prédéfinie indiquant une proportion de la quantité de candidats comprise dans chaque niveau d'agrégation dans chaque ensemble de ressources par rapport à une quantité totale de candidats du canal de commande en liaison descendante ; ou
la détermination (S101) de la quantité de candidats pour transmettre un canal de commande en liaison descendante, de l'au moins un ensemble de ressources pour transmettre un canal de commande en liaison descendante comprenant en outre :

la détermination de la quantité de candidats dans l'au moins un ensemble de ressources en fonction d'une deuxième règle prédéfinie,
la deuxième règle prédéfinie comprenant :

une quantité de candidats contenue dans le j$^{\text{ième}}$ ensemble de ressources étant

$$K * \left( \frac{xj}{\sum_{i=1}^{N} xi} \right),$$

N étant une quantité d'ensembles de ressources configurées par une station de base pour un terminal ;

x$_i$ étant une quantité d'unités de ressources contenues dans l'i$^{\text{ième}}$ ensemble de ressources;

x$_j$ étant une quantité d'unités de ressources contenues dans le j$^{\text{ième}}$ ensemble de ressources ;

K étant une quantité de candidats maximum pour une détection lorsque le terminal détecte et reçoit le canal de commande en liaison descendante dans une unité temporelle.

**2.** Procédé de transmission d'un canal de commande en liaison descendante, comprenant :

la détermination (S201) d'une quantité de candidats de canal de commande en liaison descendante dans au moins un ensemble de ressources pour transmettre un canal de commande en liaison descendante ; et l'envoi d'une notification de la quantité de candidats de canal de commande en liaison descendante dans l'au moins un ensemble de ressources à un terminal par une signalisation explicite, ou indiquant implicitement la quantité de candidats de canal de commande en liaison descendante dans l'ensemble de ressources en fonction d'une règle prédéfinie ; et

l'envoi (S202) d'un canal de commande en liaison descendante à l'intérieur de l'au moins un ensemble de ressources ;

la notification comprenant au moins une des informations suivantes :

une quantité de candidats dans chaque ensemble de ressources ;

une quantité de candidats comprise dans chaque niveau d'agrégation dans au moins deux ensembles de ressources ; ou

des niveaux d'agrégation pris en charge dans chaque ensemble de ressources, et une quantité de candidats incluse dans chaque niveau d'agrégation pris en charge ;

lorsque la notification comprend la quantité de candidats dans chaque ensemble de ressources, le procédé comprend en outre : l'indication d'une quantité de candidats comprise dans chaque niveau d'agrégation dans chaque ensemble de ressources au terminal en fonction d'une première règle prédéfinie, la première règle prédéfinie indiquant une proportion de la quantité de candidats comprise dans chaque niveau d'agrégation dans chaque ensemble de ressources par rapport à une quantité totale de candidats du canal de commande en liaison descendante ; ou

l'indication de la quantité de candidats dans l'au moins un ensemble de ressources au terminal en fonction d'une deuxième règle prédéfinie,

la deuxième règle prédéfinie comprenant :

une quantité de candidats contenue dans le j$^{\text{ième}}$ ensemble de ressources étant $K * \left( \frac{xj}{\sum_{i=1}^{N} xi} \right),$

N étant une quantité d'ensembles de ressources configurées par une station de base pour le terminal ;

x$_i$ étant une quantité d'unités de ressources contenues dans l'i$^{\text{ième}}$ ensemble de ressources ;

x$_j$ étant une quantité d'unités de ressources contenues dans le j$^{\text{ième}}$ ensemble de ressources ;

K étant une quantité de candidats maximum pour une détection lorsque le terminal détecte et reçoit le canal de commande en liaison descendante dans une unité temporelle.

**3.** Dispositif de réception d'un canal de commande en liaison descendante, comprenant :

une unité de détermination (11), configurée pour déterminer une quantité de candidats pour transmettre un canal de commande en liaison descendante, d'au moins un ensemble de ressources pour transmettre un canal de commande en liaison descendante ; et

une unité de réception (12), configurée pour recevoir le canal de commande en liaison descendante en fonction de la quantité des candidats à l'intérieur de l'au moins un ensemble de ressources ;

l'unité de détermination (11) étant configurée en outre pour :

recevoir une notification envoyée par une station de base et utilisée pour indiquer la quantité de candidats dans l'au moins un ensemble de ressources ; et

déterminer la quantité de candidats à l'intérieur de l'au moins un ensemble de ressources en fonction de la notification ;

la notification comprenant au moins une des informations suivantes :

une quantité de candidats dans chaque ensemble de ressources ;

une quantité de candidats comprise dans chaque niveau d'agrégation dans au moins deux ensembles de ressources ; ou

des niveaux d'agrégation pris en charge dans chaque ensemble de ressources, et une quantité de candidats compris dans chaque niveau d'agrégation pris en charge ;

lorsque la notification comprend la quantité de candidats dans chaque ensemble de ressources, l'unité de détermination (11) étant configurée en outre pour :

déterminer une quantité de candidats comprise dans chaque niveau d'agrégation dans chaque ensemble de ressources en fonction de la quantité de candidats comprise dans chaque ensemble de ressources dans la notification et une première règle prédéfinie, la première règle prédéfinie indiquant une proportion de la quantité de candidats comprise dans chaque niveau d'agrégation dans chaque ensemble de ressources par rapport à une quantité totale de candidats du canal de commande en liaison descendante ; ou

l'unité de détermination (11) étant configurée en outre pour déterminer la quantité de candidats dans l'au moins un ensemble de ressources en fonction d'une deuxième règle prédéfinie,

la deuxième règle prédéfinie comprenant :

une quantité de candidats contenue dans le $j^{\text{ième}}$ ensemble de ressources étant

$$K * \left( \frac{xj}{\sum_{i=1}^{N} xi} \right),$$

N étant une quantité d'ensembles de ressources configurées par une station de base pour un terminal ;

$x_i$ étant une quantité d'unités de ressources contenues dans l'$i^{\text{ième}}$ ensemble de ressources ;

$x_j$ étant une quantité d'unités de ressources contenues dans le $j^{\text{ième}}$ ensemble de ressources ;

K étant une quantité de candidats maximum pour une détection lorsque le terminal détecte et reçoit le canal de commande en liaison descendante dans une unité temporelle.

4. Dispositif de transmission d'un canal de commande en liaison descendante, comprenant :

une unité de détermination (21), configurée pour déterminer une quantité de candidats de canal de commande en liaison descendante dans l'au moins un ensemble de ressources pour transmettre un canal de commande en liaison descendante, et envoyer une notification de la quantité de candidats de canal de commande en liaison descendante dans l'au moins un ensemble de ressources à un terminal par une signalisation explicite, ou indiquant implicitement la quantité de candidats de canal de commande en liaison descendante dans l'ensemble de ressources en fonction d'une règle prédéfinie ; et

une unité d'envoi (22), configurée pour envoyer un canal de commande en liaison descendante à l'intérieur de l'au moins un ensemble de ressources ;

la notification comprenant au moins une des informations suivantes :

une quantité de candidats dans chaque ensemble de ressources ;

une quantité de candidats comprise dans chaque niveau d'agrégation dans au moins deux ensembles de ressources ; ou

des niveaux d'agrégation pris en charge dans chaque ensemble de ressources, et une quantité de candidats compris dans chaque niveau d'agrégation pris en charge ;

l'unité de détermination (21) étant configurée en outre pour, lorsque la notification comprend la quantité de candidats dans chaque ensemble de ressources, indiquer une quantité de candidats comprise dans chaque niveau d'agrégation dans chaque ensemble de ressources au terminal en fonction de la première règle prédéfinie, la première règle prédéfinie indiquant une proportion de la quantité de candidats comprise dans chaque niveau d'agrégation dans chaque ensemble de ressources par rapport à une quantité totale de candidats du canal de commande en liaison descendante ; ou

l'unité de détermination (21) étant configurée en outre pour indiquer la quantité de candidats dans l'au moins un ensemble de ressources au terminal en fonction d'une deuxième règle prédéfinie, la deuxième règle prédéfinie comprenant :

une quantité de candidats contenue dans le $j^{\text{ième}}$ ensemble de ressources étant

$$K * \left( \frac{x_i}{\sum_{i=0}^{N} x_i} \right) ,$$

N étant une quantité d'ensembles de ressources configurées par une station de base pour le terminal ;
$x_i$ étant une quantité d'unités de ressources contenues dans l'$i^{\text{ième}}$ ensemble de ressources ;
$x_j$ étant une quantité d'unités de ressources contenues dans le $j^{\text{ième}}$ ensemble de ressources ;
K étant une quantité de candidats maximum pour une détection lorsque le terminal détecte et reçoit le canal de commande en liaison descendante dans une unité temporelle.

5. Support de stockage lisible par ordinateur comprenant des instructions qui, lorsqu'elles sont exécutées sur un ordinateur, amènent l'ordinateur à exécuter le procédé selon la revendication 1 ou 2.

Determining the number of candidates for transmitting a downlink control channel, of at least one set of resources for transmitting a downlink control channel    S101

Receiving the downlink control channel according to the number of the candidates, within the set of resources    S102

Fig. 1

Determining the number of downlink control channel candidates in at least one set of resources for transmitting a downlink control channel, and sending a notification of the number of downlink control channel candidates in the set of resources to a terminal by explicit signaling, or implicitly indicating the number of downlink control channel candidates in the set of resources according to a predefined rule    S201

Sending the downlink control channel within the set of resources    S202

Fig. 2

| Determining unit |
| :---: |

11

| Receiving unit |
| :---: |

12

Fig. 3

| Determining unit |
| :---: |

21

| Sending unit |
| :---: |

22

Fig. 4

600

| Processor |

620

| Memory |

| Bus interface |

610

| Transceiver |

630

| User interface |

Fig. 5

500

| Processor |

520

| Memory |

| Bus interface |

510

| Transceiver |

Fig. 6

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 20150085802 A1
- US 20160323850 A1
- US 20160021644 A1